# EUROPEAN PATENT APPLICATION

(11) **EP 4 013 097 A1**
(43) Date of publication of application: **15.06.2022**
(21) Application number: 20853299.4
(22) Date of filing: 05.08.2020
(51) Int. Cl.: H04W 16/26, H04W 40/02, H04W 40/24

(54) **RELAY DEVICE FOR TRANSFERRING SIGNAL WITH DESIGNATED PATH, CONTROL METHOD, AND PROGRAM**

(30) Priority: 09.08.2019 JP 2019147863; 09.08.2019 JP 2019147867
(71) Applicant: KDDI Corporation, Tokyo 163-8003 (JP)
(72) Inventor: TAKEDA, Hiroki, Tokyo 163-8003 (JP)
(74) Representative: Pitchford, James Edward
(86) International application number: PCT/JP2020/029947
(87) International publication number: WO 2021/029291

(57) **Abstract**

A relay device that relays communication between a base station device and a terminal device receives a signal transmitted for the communication from another device, determines a transfer destination device for data that is included in the received signal based on identification information that is included in the received signal and indicates a path through which the data is transferred between the base station device and the terminal device, and transmits the signal that includes the data to the determined transfer destination device. The relay device determines a specific device as the transfer destination device when the relay device is not included in the path indicated by the identification information.

## Description

### TECHNICAL FIELD

The present invention relates to a relay device, a control method, and a program, and specifically to a relay communication control technique for transferring routed signals.

### BACKGROUND ART

In the third generation partnership project (3GPP), development is underway for NR (New Radio) standard that is a fifth generation (5G) cellular communication standard. Also, in the NR standard, IAB (Integrated Access and Backhaul) is being studied as a technique for performing communication via a backhaul line using wireless resources used by a base station device to perform communication with a terminal device. In the IAB, for example, a communication line between a 5G base station device (IAB donor) that is connected directly to a core network and a relay device (IAB node) that provides a wireless access to a terminal device, and a communication line between IAB nodes are established by wireless communication. The IAB donor manages the IAB nodes that are connected directly or indirectly to the IAB donor, and is capable of recognizing to which IAB node the terminal device that is not connected directly to the IAB donor is connected. For example, the IAB donor transmits a packet that includes data destined for a terminal device to an IAB node that is connected to the terminal device, and the IAB node transmits a wireless signal that includes the data to the terminal device. A plurality of paths maybe set between the IAB donor and the IAB node.

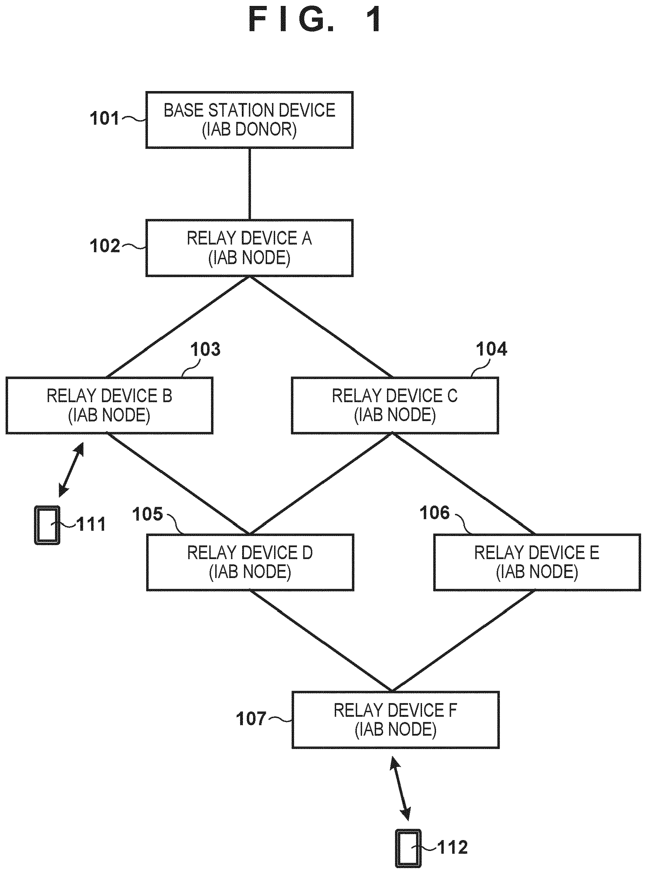

FIG. 1 shows an example of a wireless communication system in which the IAB is used. In the example shown in FIG. 1, for example, a 5G base station device 101 that is connected to a core network, a relay device A 102 that can be connected directly to the base station device 101, and a relay device B 103, a relay device C 104, a relay device D 105, a relay device E 106, and a relay device F 107 that are connected to the base station device 101 via at least the relay device A 102 are provided. In one example, the base station device 101 is an IAB donor, and the relay devices are IAB nodes. In the case where the base station device 101 performs communication with, for example, a terminal device 111, a packet is transferred from the base station device 101 to the relay device A 102, and then transferred from the relay device A 102 to the relay device B 103 in this order, and a wireless signal that includes data is transmitted from the relay device B 103 to the terminal device 111. Likewise, a wireless signal transmitted from the terminal device 111 is received by the relay device B 103, and a packet that includes the data is transmitted to the base station device 101 via the relay device A 102. A plurality of paths can be set between the base station device 101 and one relay device. For example, the following three paths can be set between the base station device 101 and the relay device F 107: a path that passes through the relay device A 102, the relay device B 103, and the relay device D 105; a path that passes through the relay device A 102, the relay device C 104, and the relay device D 105; and a path that passes through the relay device A 102, the relay device C 104, and the relay device E 106.

In the case where a plurality of paths can be set, the base station device specifies a relay device that communicates directly with the terminal device, and determines a path to be used to communicate with the relay device. For example, the path to be used is determined based on a predetermined criterion such as equalizing the loads of the plurality of paths. Non Patent Literature 1 discloses that a packet to be relayed includes: node identification information that indicates relay destination nodes (for example, the base station device in the case of an uplink, and a relay device that communicates directly with the terminal device in the case of a downlink); and path identification information that indicates paths to be used. With this configuration, each relay device can recognize, based on the path identification information, to which node a received packet is to be transferred.

### CITATION LIST

### NON PATENT LITERATURE

NPL 1: 3GPP Contributed Article, R2-1908363, May, 2019

### SUMMARY OF INVENTION

### TECHNICAL PROBLEM

A case may occur where communication cannot be performed in a portion of a relay path. For example, a case may be considered where communication cannot be continued due to degradation in the quality of wireless communication between the relay device A 102 and the relay device B 103 in FIG. 1. In this case, a packet that is received by the relay device A 102 from the base station device 101 and includes path identification information that indicates a path that passes through the relay device B 103 cannot be transmitted to the relay device B 103, which may result in a packet transfer failure.

### SOLUTION TO PROBLEM

The present invention provides a technique for enabling a signal to be transferred appropriately to the address in communication that uses a relay transmission path.

A relay device according to one aspect of the present invention is a relay device that relays communication between a base station device and a terminal device, the relay device including: receiving means for receiving a signal transmitted for the communication from another device; determining means for determining a transfer destination device for data that is included in the received signal based on identification information that is included in the received signal and indicates a path through which the data is transferred between the base station device and the terminal device; and transmitting means for transmitting the signal that includes the data to the determined transfer destination device, wherein the determining means determines a specific device as the transfer destination device when the relay device is not included in the path indicated by the identification information.

### ADVANTAGEOUS EFFECTS OF INVENTION

According to the present invention, it is possible to appropriately transfer a signal to the address in communication that uses a relay transmission path.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an example of a configuration of a wireless communication system.
FIG. 2 is a diagram showing an example of a hardware configuration of a relay device.
FIG. 3 is a diagram showing an example of a functional configuration of the relay device.
FIG. 4 is a diagram showing an example of a flow of processing performed by the relay device.
FIG. 5 is a diagram showing an example of a functional configuration of a relay device.
FIG. 6 is a diagram showing an example of a flow of processing performed by the relay device.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### Embodiment 1

### System Configuration

A wireless communication system according to the present embodiment is configured as shown in FIG. 1 that was described above. In this system, as described above, communication between a base station device 101 (IAB donor) and each of terminal devices 111 to 112 can be performed through a relay path that includes one or more relay devices (IAB nodes). A plurality of relay paths can be set, and the base station device can determine which path should be used to perform communication. For example, as described above, the following three paths can be set between the base station device 101 and a relay device F 107: a first path that passes through a relay device A 102, a relay device B 103, and a relay device D 105; a second path that passes through the relay device A 102, a relay device C 104, and the relay device D 105; and a third path that passes through the relay device A 102, the relay device C 104, and a relay device E 106. The base station device 101 determines, for example, to perform communication with the terminal device 112 via the relay device F 107, and selects a path from among the above-described three paths as the path between the base station device 101 and the relay device F 107.

Anew path is set, for example, when the base station device establishes a connection with a newly installed relay device or when a relay device establishes a connection with another relay device that has been newly installed. For example, in response to the relay device F 107 being newly installed and a connection between the relay device F 107 and the relay device E 106 being established, a path that passes from the base station device 101 to the relay device F 107 via the relay device A 102, the relay device C 104, and the relay device E 106 is set. Also, in response to a connection between the relay device F 107 and the relay device D 105 being established, a path that passes from the base station device 101 to the relay device F 107 via the relay device A 102, the relay device B 103, and the relay device D 105, and a path that passes from the base station device 101 to the relay device F 107 via the relay device A 102, the relay device C 104, and the relay device D 105 are set. When the paths have been set, identification information that indicates the paths is notified to the relay devices that are included in the paths. In the identification information, information for specifying the devices that are included in the paths and information that indicates the order of the devices to which a signal is transferred are associated, and the identification information is stored in each relay device. Each relay device can specify, based on the identification information, a transfer destination device (for example, another relay device or the base station device) to which a signal is transferred. As used herein, the term "transfer" may refer to a non-regenerative relay that directly amplifies a received signal and transmits the amplified signal to another device. However, the following description will be given assuming that a regenerative relay that decodes a received signal to extract data and generate a transmission signal from the extracted data, and transmits the generated transmission signal to a transfer destination device is used. Also, the expression "transfer a signal" refers to transferring data included in the signal, and as will be described below, header information such as path identification information may be changed.

In the case where a plurality of communication lines are established between two relay devices, the path identification information may include information for specifying a communication line between the relay devices. For example, in the case where two communication lines including a communication line α and a communication line β are established between the relay device A 102 and the relay device B 103, the path identification information may include information for specifying a communication line to be used (the communication line α or the communication line β).

In one example, in the present embodiment, it is assumed that the base station device 101 determines to perform communication with the terminal device 112, and the first path that passes through the relay device A 102, the relay device B 103, and the relay device D 105 is selected to perform the communication. In this case, a signal to be transmitted from the base station device 101 to the terminal device 112 is first transmitted to the relay device A 102, and the relay device A 102 receives the signal and transfers the received signal to the relay device B 103. After that, the relay device B 103 transfers the signal received from the relay device A 102 to the relay device D 105, and the relay device D 105 transfers the signal received from the relay device B 103 to the relay device F 107. Then, the relay device F 107 transmits the data included in the received signal to the terminal device 112. In one example, communication between a base station device and a relay device, communication between relay devices, and communication between a relay device and a terminal device are performed in a wireless manner.

Hereinafter, an example will be described in which the base station device 101 performs communication with a terminal device via a plurality of relay devices. However, the base station device 101 can, of course, perform commination with the terminal device via one relay device or no relay device.

In the case of transmitting a signal by using the first path described above, the base station device 101 incorporates, into the signal, address information that indicates, as the address, the relay device F 107 that communicates directly with the terminal device 112 and path identification information that indicates the first path as the path through which the signal is transferred, and then transmits the signal. Each of the relay devices that are included in the first path checks the address information, and determines whether the relay device has been designated as the address. If it is determined that the relay device has been designated as the address, the relay device transmits, based on terminal device information included in the transferred signal, a wireless signal that includes transferred data to the terminal device. Also, if it is determined, as a result of checking the address information, that the relay device has not been designated as the address, the relay device specifies a transfer destination device for the signal based on the identification information. For example, in the case of the first path described above, when the relay device B 103 receives a signal from the relay device A 102, the relay device B 103 checks the address information that is included in the signal. If it is determined that the relay device B 103 has not been designated as the address (the relay device F 107), the relay device B 103 specifies the relay device D 105 as the transfer destination device based on the path identification information that indicates the first path, and transfers the received signal to the relay device D 105. Also, in the case of the first path, when the relay device B 103 receives a signal from the relay device D 105, the relay device B 103 checks the address information that is included in the signal. If it is determined that the relay device B 103 has not been designated as the address (the base station device 101), the relay device B 103 specifies the relay device A 102 as the transfer destination device based on the path identification information that indicates the first path, and transfers the received signal to the relay device A 102. In this way, communication between the base station device 101 and a terminal device can be performed by using the relay path.

Here, it is assumed that, for example, a situation occurs in which the base station device 101 transmits, to the relay device A 102, a signal that includes address information that indicates the relay device F 107 and path identification information that indicates the first path, but the relay device A 102 cannot transfer the signal to the relay device B 103. This situation may occur when, for example, an RLF (Radio Link Failure) occurs in a wireless link between the relay device A 102 and the relay device B 103 or when the wireless link is brought into a high load state and sufficiently high quality communication can no longer be performed. At this time, the relay device A 102 may transmit, to the base station device 101, a notification indicating that the first path is unavailable and thus another path should be used. Then, the base station device 101 can re-send a signal using, for example, the second path or the third path described above, without using the wireless link between the relay device A 102 and the relay device B 103. On the other hand, for example, if, in a path in use, a relay device located close to the address determines that the relay device cannot use the wireless link between the relay device and a device designated as the address, and transmits a notification indicating that the path is unavailable to the base station device 101, it takes time for a signal transmitted from the base station 101 to arrive at the relay device that cannot use the wireless link, and it also takes time for the notification to arrive at the base station device 101, which may extend the time required for the signal to be transmitted via another path.

To address this, in the present embodiment, in order to prevent the communication delay caused by the signal being transmitted via another path, the relay device transfers the signal to another address in addition to or instead of the notification described above. For example, if the relay device A 102 determines that the wireless link between the relay device A 102 and the relay device B 103 is unavailable, the relay device A 102 transfers the signal to the relay device C 104 instead of the relay device B 103. In this case, however, the relay device C 104 is not included in the path indicated by the path identification information that is included in the received signal, and thus the relay device C 104 cannot determine the transfer destination device for the signal based on the identification information.

Accordingly, in the present embodiment, in the case where a relay device is not included in a path indicated by path identification information that is included in a signal received by the relay device, the relay device determines a specific device as the transfer destination device for the signal. For example, the relay device C 104 determines either one of the relay device D 105 and the relay device E 106 to which the relay device C 104 has been connected, as the transfer destination device. For example, the relay device C 104 may select a path to the relay device F 107 based on the path information that is stored in the relay device C 104 and the address information, and determine a device to which the relay device C 104 should transfer the signal through the selected path, as the transfer destination device.

Also, the base station device 101 may make an advance setting as to whether the relay device C 104 can set a transfer destination device. In this case, the relay device C 104 may determine a transfer destination device for a received signal in accordance with the advance setting, or discard a received signal without transferring the received signal.

The relay device C 104 may determine a predetermined transfer destination device that has been set in advance, as the specific device. In one example, in response to the presence of a plurality of candidate devices as candidates for the transfer destination to which a signal from the base station device 101 is transmitted, the relay device C 104 may set in advance one of the candidate devices as a predetermined transfer destination device. For example, in response to the relay device C 104 establishing connections to the relay device D 105 and the relay device E 106, respectively (in response to the relay device C 104 starting, for example, dual connectivity), the relay device C 104 may set in advance either one (for example, the relay device D 105) of the devices as a predetermined transfer destination device. The relay device C 104 determines the predetermined transfer destination device based on, for example, an instruction from the base station device 101. The relay device C 104 may determine the predetermined transfer destination device without an instruction from the base station device 101. The number of predetermined transfer destination devices does not necessarily need to be one, and a plurality of predetermined transfer destination devices may be set in advance. At this time, the relay device C 104 may hold information that indicates the order of priority assigned to each of the plurality of predetermined transfer destination devices. Then, the relay device C 104 may, for example, determine a specific device to which the signal is actually to be transferred, based on the order of priority from among the devices that are included in the path to the address indicated by the address information and are also included as predetermined transfer destination devices. The relay device C 104 may determine, for example, one of the predetermined transfer destination devices that is highest in the order of priority as the specific device. Alternatively, the relay device C 104 may determine, for example, one of the predetermined transfer destination devices that is higher than a predetermined rank in the order of priority, as the specific device.

There is a case where even when the relay device C 104 is not included in the path indicated by the path identification information included in the received signal, the relay device C 104 can determine that the relay device C 104 is included as a device that can transmit the signal. For example, the first path described above includes the relay device D 105, and the relay device C 104 has been connected to the relay device D 105, and thus in this case, the relay device C 104 may determine the relay device D 105 as the specific device to which the signal is transmitted. In the case where such processing is executed, the base station device 101 may transmit, to each relay device, information that indicates identification information that indicates all paths between the base station device 101 and the other devices. Also, the base station device 101 may transmit, to each relay device, path identification information that indicates not only all paths that include the relay device, but also all paths that include the other relay devices to which the relay device is connected, and information that indicates the devices that are included in the paths. With this configuration, when each relay device receives a signal that includes path identification information that indicates a path that does not include the relay device, if there is a device to which the relay device has been connected and that is included in the path indicated by the path identification information, the relay device can transfer the signal to the device. The relay device may narrow the devices from which the transfer destination is selected, by determining whether the signal is an uplink signal or a downlink signal. That is, for example, when the relay device C 104 receives a downlink signal from the relay device A 102, the relay device C 104 may delete a device that is in the uplink direction such as the relay device A 102 from the candidate devices from which the specific device is selected. As a result, it is possible to prevent a situation in which a signal is not transmitted to the terminal device due to, for example, the signal being transferred back to the signal transmission source device that transmitted the signal. Also, at this time, in the case where the base station device 101 or the relay device F 107 (signal transmission destination) has been designated as the address indicated by the address information, the relay device C 104 may determine, based on the address information, whether the signal is an uplink signal or a downlink signal. Also, in one example, the relay device C 104 may determine whether the signal is an uplink signal or a downlink signal based on the path indicated by the path identification information.

Also, the relay device C 104 may determine the specific device to which the signal is transmitted, from among a plurality of devices as signal transfer destinations, according to the use frequency of each path in communication in a direction opposite to the direction in which the signal is transmitted (specifically, the communication being uplink communication in the case where the signal is a downlink signal or downlink communication in the case where the signal is an uplink signal). That is, a path with a high use frequency in communication in a link in a direction opposite to the direction in which the signal is transferred can be regarded as a good wireless link that has, for example, good wireless communication quality. Accordingly, the specific device can be determined such that the path with a high use frequency is used. For example, the relay device C 104 determines a first use frequency and a second use frequency, the first use frequency being the use frequency of a path that passes through the relay device F 107, the relay device D 105, and the relay device C 104, and the second use frequency being the use frequency of a path that passes through the relay device F 107, the relay device E 106, and the relay device C 104. If it is determined that the first use frequency is higher, the relay device C 104 determines the relay device D 105 as the specific device, and if the second use frequency is higher, the relay device C 104 determines the relay device E 106 as the specific device. If the difference between the first use frequency and the second use frequency is less than or equal to a predetermined value, the relay device C 104 may determine, for example, a predetermined transfer destination device that has been set in advance as the specific device.

In the case where the relay device C 104 is not included in the path indicated by the identification information that is included in the received signal, the relay device C 104 may transfer the signal as described above, and also transmit a notification indicating that the path is unavailable to the base station device 101 or the relay device F 107 (signal transmission source). By transmitting the notification, the relay device C 104 can prompt the signal transmission source device to perform communication using another path.

Also, the period during which the relay device C 104 transfers the signal may be limited to a predetermined period after communication has been established with the signal transmission source device. In this case, after the predetermined period has passed, the relay device C 104 does not determine a transfer destination device, and in the case where the relay device C 104 is not included in the path indicated by the path identification information that is included in the received signal, the relay device C 104 may discard the signal without transferring the signal.

In the case where the relay device C 104 is not included in the path indicated by the path identification information that is included in the received signal, the relay device C 104 may change the path identification information included in the signal. For example, the relay device C 104 can replace the path identification information included in the signal with identification information that corresponds to the path that includes the signal transfer destination device. As a result, a device that has received a signal from the relay device C 104 can determine the signal transfer destination based on the identification information that replaced the path identification information. For example, when the relay device C 104 receives a signal that includes path identification information that corresponds to the first path described above, the relay device C 104 determines the transfer destination device in the manner described above. Then, the relay device C 104 replaces the path identification information included in the received signal with identification information that corresponds to the path that includes the transfer destination device. For example, the relay device C 104 replaces the path identification information with identification information that corresponds to the second path described above when the relay device D 105 is determined as the transfer destination device, or with identification information that corresponds to the third path described above when the relay device E 106 is determined as the transfer destination device. As a result, the relay device D 105 or the relay device E 106 that has received the transferred signal can determine to transfer the signal to the relay device F 107 based on the identification information that replaced the path identification information. The relay device C 104 does not necessarily need to replace the path identification information that corresponds to the first path when the relay device D 105 is determined as the transfer destination device. That is, the first path does not include the relay device C 104, but includes the relay device D 105, and thus when the relay device D 105 is determined as the transfer destination, the path identification information may be used as is without being replaced. With this configuration, after the relay device D 105, the signal can be transferred via the path set by the base station device 101.

Also, the relay device C 104 may replace the path identification information with, for example, predetermined information. The predetermined information may be information that indicates that the path used to transfer the signal is not specified. The relay device C 104 may delete the path identification information instead of replacing the path identification information with the predetermined information. That is, information that indicates that the path is not specified may be implicitly indicated by not including the path identification information in the signal. In this case, a relay device that has received the signal transferred by the relay device C 104 cannot specify the signal transfer destination based on the path identification information. Accordingly, as described above by focusing on the relay device C 104, the relay device determines the transfer destination device and transfers the signal to the determined transfer destination device.

In the example given above, an example has been described in which, in the case where the relay device C 104 is not included in the path indicated by the path identification information that is included in the received signal, the relay device C 104 changes the path identification information, but the present invention is not limited thereto. That is, in the example described above, as a result of the relay device A 102 transferring the signal to the relay device C 104 instead of the relay device B 103 originally designated as the transfer destination, the relay device C 104 receives the signal that includes the path identification information that corresponds to a path that does not include the relay device C 104. Instead, in the case where the relay device A 102 determines the signal transfer destination without using the path indicated by the path identification information, the relay device A 102 may change the path identification information. The path identification information may be changed by replacing the path identification information with predetermined information or deleting the path identification information in the same manner as descried above. In this case, even when the relay device C 104 receives the signal transferred by the relay device A 102, the relay device C 104 cannot specify the signal transfer destination based on the path identification information, and thus determines the transfer destination device and transfers the signal to the determined transfer destination device in the manner as described above. Also, the relay device A 102 may replace the path identification information with identification information that corresponds to a path that includes the relay device C 104 as the signal transfer destination. In this case, when the relay device C 104 receives the signal transferred by the relay device A 102, the relay device C 104 can specify the path that is indicated by the path identification information and includes the relay device C 104, and thus the relay device C 104 can determine the signal transfer destination based on the path. The relay device A 102 may transfer the signal without changing the path identification information when, for example, a wireless link has been established with the relay device D 105 that is included in the first path indicated by the path identification information and it is determined that the signal is to be transferred directly to the relay device D 105.

The relay device C 104 may determine the signal transfer destination device, and also determine a communication line used to transfer the signal by randomly selecting from among, for example, available communication lines when, for example, a plurality of communication lines are established between the relay device C 104 and the transfer destination device. The communication line used to transfer the signal may be selected based on a predetermined setting or rule, the quality of communication line (QoS), or the amount of load (the number of nodes used, the number of UEs, or the utilization rate of radio resources).

The above description has been given by focusing on the relay device A 102 and the relay device C 104, but all of the relay devices may be configured to be capable of performing the processing performed by the relay device A 102 and the processing performed by the relay device C 104 that were described above.

### Device Configuration

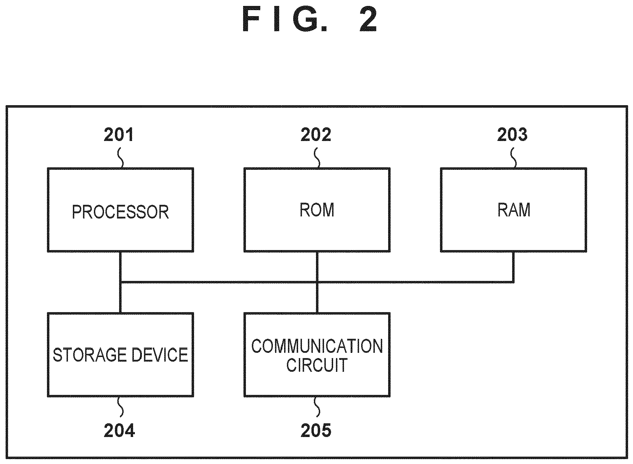

Next, a description will be given of an example of a hardware configuration of a relay device that performs processing as described above with reference to FIG. 2. In one example, the relay device includes a processor 201, a ROM 202, a RAM 203, a storage device 204, and a communication circuit 205. The processor 201 is a computer that includes a general-purpose CPU (central processing unit) and one or more processing circuits such as an ASIC (application-specific integrated circuit), and performs the overall processing of the relay device and each of the processing operations described above by reading and executing a program stored in the ROM 202 or the storage device 204. The ROM 202 is a read-only memory in which the program regarding processing executed by the relay device and information such as various types of parameters are stored. The RAM 203 is a random access memory that functions as a work space for the processor 201 to execute the program and in which temporary information is stored. The storage device 204 may include, for example, an external removable storage device or the like. The communication circuit 205 may include, for example, a wireless communication circuit. The relay device includes, as the communication circuit 205 for performing communication with the base station device, the other relay devices, and the terminal device, for example, a baseband circuit, an RF circuit, and an antenna for cellular communication. The communication circuit 205 included in the relay device may include, for example, a circuit for performing wireless or wired communication for transmitting control signals. FIG. 2 shows only one communication circuit 205, but each device may include a plurality of communication circuits.

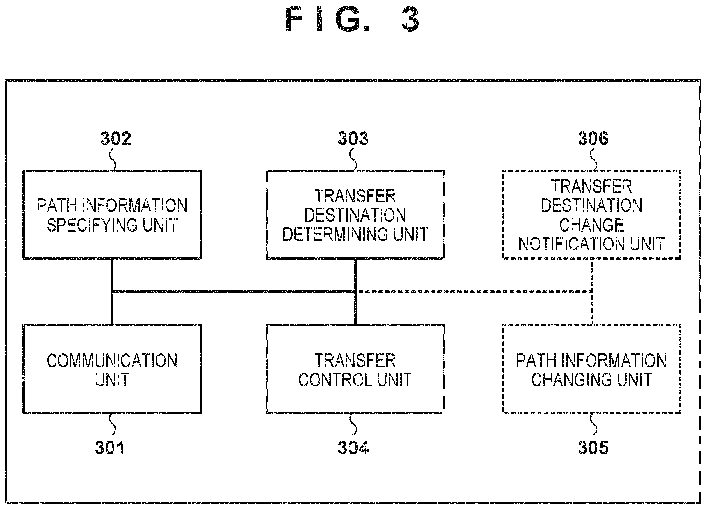

FIG. 3 shows an example of a functional configuration of a relay device. The relay device includes, for example, a communication unit 301, a path information specifying unit 302, a transfer destination determining unit 303, and a transfer control unit 304. The relay device may also include a path information changing unit 305 and a transfer destination change notification unit 306. These functional units may be implemented by, for example the processor 201 executing a program stored in the ROM 202.

The communication unit 301 is a functional unit for performing wireless communication with the base station device, the other relay devices, and the terminal device in accordance with the cellular communication standards. The path information specifying unit 302 specifies a path through which a signal received from the base station device or another relay device should be transferred, based on identification information included in the signal. The transfer destination determining unit 303 determines a signal transfer destination device based on the path specified by the path information specifying unit 302. For example, in the case where the relay device is included in the specified path, the transfer destination determining unit 303 specifies a device to which the signal should be transferred next in the specified path. In the case where, for example, it is not possible to perform communication using a wireless link established between the relay device and the transfer destination device determined based on the specified path, the transfer destination determining unit 303 may determine to transfer the signal to a device different from the transfer destination device. In the case where the relay device is not included in the specified path, the transfer destination determining unit 303 may determine a specific device as the transfer destination device. The method for determining a specific device has already been described above, and thus a description thereof is not repeated here. The transfer control unit 304 controls the communication unit 301 to transfer the received signal to the transfer destination device determined by the transfer destination determining unit 303. In the case where the received signal at this time is transferred to a device that is different from the next transfer destination device in the path specified by the identification information included in the received signal, the path information changing unit 305 may change the identification information. The method for changing identification information has also already been described above, and thus a description thereof is not repeated here. In the case where the signal is transferred to a device that is different from the next transfer destination device in the path specified by the identification information included in the received signal, the transfer destination change notification unit 306 transmits, to the base station device 101, a signal for notifying that the path is unavailable. The transfer destination change notification unit 306 may transmit, to the device that determined the path, a notification indicating that the path is unavailable. For example, in the case of a signal transmitted from the relay device F 107, the transfer destination change notification unit 306 may transmit a notification indicating that the path is unavailable to the base station device 101 when the path was determined by the base station device 101, and transmit the notification to the relay device F 107 when the path was determined by the relay device F 107.

### Processing Flow

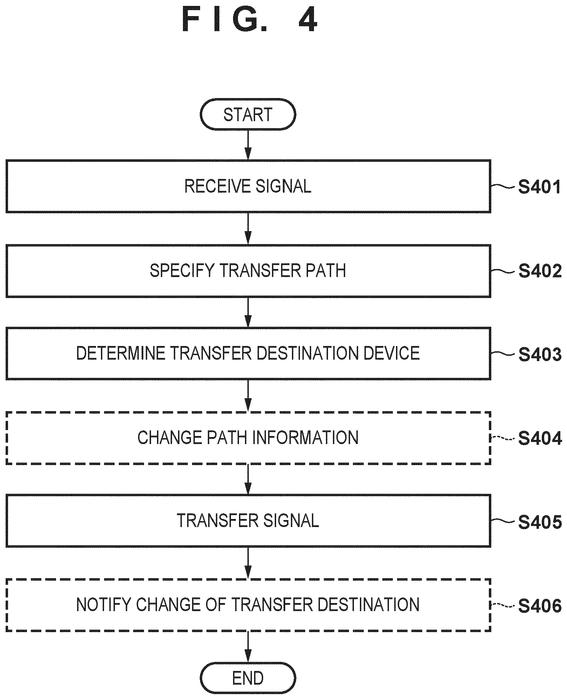

An overall flow of processing performed by a relay device will be described with reference to FIG. 4. The processing shown in FIG. 4 is performed by, for example, a relay device that is located midway in a path between the base station device and a relay device that is connected directly to the terminal device (or in other words, a relay device that is not located at the end of the path). In this processing, the relay device first receives a signal from another device (for example, the base station device or another relay device) (S401). The relay device analyzes the received signal, extracts address information and path identification information that are included in the signal, the address information indicating the device designated as the address, and the path identification information indicating paths, and then specifies a path through which the signal should be transferred based on the path identification information (S402). Then, the relay device determines the transfer destination device based on the specified path (S403).

For example, in the case where the relay device is included in the specified path, the relay device determines a device to which the signal should be transferred next after the relay device in the specified path, as the transfer destination device. At this time, if, for example, a failure occurs in the wireless link between the relay device and the next transfer destination device in the path, the relay device may determine that communication should not be performed with the transfer destination device. In this case, the relay device may determine another device that is not included in the path as the signal transfer destination. Also, if the relay device is not included in the specified path, the relay device may independently determine the transfer destination device. The method for determining a transfer destination device in this case has already been described above, and thus a description thereof is omitted here.

After that, the relay device transfers the signal received in S401 to the transfer destination device determined in S403 (S405). At this time, in the case where the relay device transfers the signal to a device that is not included in the path specified by the path identification information included in the signal or where the relay device is not included in the specified path, the relay device may change the path identification information (S404). The processing for changing path identification information has also already been described above, and thus a description thereof is not repeated here. The processing in S404 does not necessarily need to be performed. Also, in the case where the relay device transfers the signal to a device that is not included in the path specified by the path identification information included in the signal or where the relay device is not included in the specified path, the relay device may transmit, to the base station device 101, a notification indicating that the path is unavailable (S406). The relay device may not transmit the notification in S406 if the relay device finds out that, for example, the path identification information included in the received signal has been changed to predetermined information, because it can be assumed that the relay device that changed the path identification information has already transmitted, to the base station device 101, the notification indicating that the path is unavailable. Also, if the transfer destination is not changed, the notification is not transmitted in S406. In S406, the notification is transmitted to the device that initially determined the signal transfer path. For example, in the case where the relay device F 107 determines a path when transmitting a signal to the base station device 101, the notification is transmitted to the relay device F 107. In the case where the base station device 101 determines the path, the notification is transmitted to the base station device 101.

In this way, with the relay device described above, when a situation occurs in which it is difficult to transfer a signal along a path based on the path identification information included in the signal, the signal is continuously transferred using a path different from the path, and thus the signal can be transferred to the device designated as the address. Also, at this time, by appropriately selecting the transfer destination device in the manner described above, efficient signal transfer can be achieved. Also, in the signal to be transferred, by changing the path identification information along with the transfer destination device being changed, the transfer destination device can easily determine the signal transfer destination. Also, when the transfer destination is changed, by transmitting a notification indicating that the initially set path is unavailable, it is possible to prevent a situation in which the signal is repeatedly transmitted in a state in which the unavailable path is designated.

### Embodiment 2

Next, a second embodiment will be described. Examples of a configuration of a system and a hardware configuration of a device of the present embodiment are the same as those of Embodiment 1, and thus a description thereof is omitted.

In the present embodiment, a configuration will be described in which, for example, if an RLF occurs in a wireless link between a relay device and a transfer destination device in the path specified by path identification information, and the relay device cannot perform communication using the path, the relay device determines another transfer destination device, and permits second path identification information to be added to the signal, the second path identification information being information regarding another path that includes the determined transfer destination device. For example, when the relay device A 102 receives a signal that includes first path identification information that corresponds to the first path, and determines that the received signal cannot be transferred to the relay device B 103, the relay device A 102 determines the relay device C 104 as the transfer destination device, and adds second path identification information that indicates a path that includes the relay device C 104 to the header of the received signal. In one example, the second path identification information is information for specifying the second path or the third path described above that includes the relay device C 104. Two types of second path identification information that respectively correspond to the second path and the third path may be added to the header of the received signal.

The relay device may add another path identification information to the received signal even when, for example, the path specified by the path identification information can be used to perform communication. That is, even when the signal can be transferred according to the first path identification information included in the received signal, the relay device may add second path identification information to the received signal, and transfer the signal obtained by adding the second path identification information to the transfer destination device. For example, when the relay device A 102 receives a signal that includes path identification information that indicates the second path described above, the relay device A 102 may generate a signal by adding, for example, another identification information that indicates the third path to the received signal, and transmit the generated signal to the relay device C 104. In this case, the relay device C 104 is included in both of the second path and the third path, and thus the relay device C 104 can select either one of the second path and the third path, and transfer the signal to the relay device D 105 or the relay device E 106. The relay device can add path identification information regarding a path that includes the relay device, but may add path identification information regarding a path that does not include the relay device. For example, the relay device C 104 may transfer a signal obtained by adding second path identification information that includes the relay device C 104 to the relay device D 105, or may transfer a signal obtained by first path identification information that does not include the relay device C 104 to the relay device D 105.

A device that controls communication such as the base station device 101 may transmit in advance, to each relay device, a notification that indicates whether or not to permit adding identification information. For example, the relay device A 102 may add second path identification information as described above only when a notification that indicates permission to add identification information has been received from the base station device 101. Whether or not to permit adding identification information may be determined for each path. For example, the base station device 101 may transmit in advance, to each relay device, information that specifies path identification information for which addition is permitted. Also, the base station device 101 may transmit in advance, to each relay device, addition permission information based on which whether or not to permit adding one or more paths is determined. In one example, the addition permission information may be information that indicates radio utilization rate in each of the one or more paths. In this case, the relay device may determine that addition is not permitted for a path that includes a section with a radio utilization rate higher that a predetermined value from among addition candidate paths. The base station device 101 may also transmit in advance, to each relay device, a notification indicating information regarding the predetermined value. Furthermore, the base station device 101 may also transmit in advance, to each relay device, a notification indicating only the information regarding the predetermined value. In this case, each relay device may compare radio utilization rate in each wireless link included in a plurality of path candidates between the relay device and the signal destination device with the predetermined value, and determine whether or not to permit adding path identification information regarding each path by determining, for example, whether or not the radio utilization rate in each path is lower than the predetermined value. The relay device may specify a path to be added based on the above-described information, and add path identification information regarding the specified path.

Another relay device that has received the signal obtained by adding the path identification information specifies a path that includes the relay device from among the paths indicated by two or more types of path identification information, and then specifies a device to which the signal should be transmitted next after the relay device in the specified path. Then, the relay device transmits the signal to the specified device. In this relay device as well, if, for example, an RLF occurs in the wireless link between the relay device and the specified device, the relay device may perform path identification information addition processing as described above.

When path identification information has been added, the relay device may transmit a notification indicating that the path identification information has been added to a device that controls communication such as the base station device 101. Also, the relay device may transmit a notification indicating the reason for adding the path identification information to a device that controls communication such as the base station device 101. For example, when second path identification information has been added as a result of the relay device determining that communication cannot be performed using a path specified by first path identification information included in the received signal, the base station device 101 determines to not use the path indicated by the first path identification information when transmitting the next and subsequent signals. Also, when path identification information has been added due to the presence of a path with a relatively low radio utilization rate, the base station device 101 may determine to use the path indicated by the added path identification information when transmitting the next and subsequent signals so as to achieve load balancing.

The relay device may delete the first path identification information included in the received signal when adding second path identification information. With this configuration, another device that has received the signal transferred from the relay device does not need to perform transfer destination determining processing. A notification indicating information indicating whether or not to permit deleting path identification information may be transmitted from the base station device 101. In this case, the relay device deletes the first path identification information only when deletion of path identification information is permitted. Also, the relay device may obtain in advance, for example, deletion permission information that indicates whether or not to delete path identification information regarding one or more paths, from the base station device 101, and determine whether or not to delete the first path identification information included in the received signal. Also, when the relay device deletes the first path identification information, the relay device may transmit, to the base station device 101, a notification indicating that path identification information has been deleted. With this configuration, the base station device 101 can determine to not use the path indicated by the first path identification information when transmitting the next and subsequent signals.

### Device Configuration

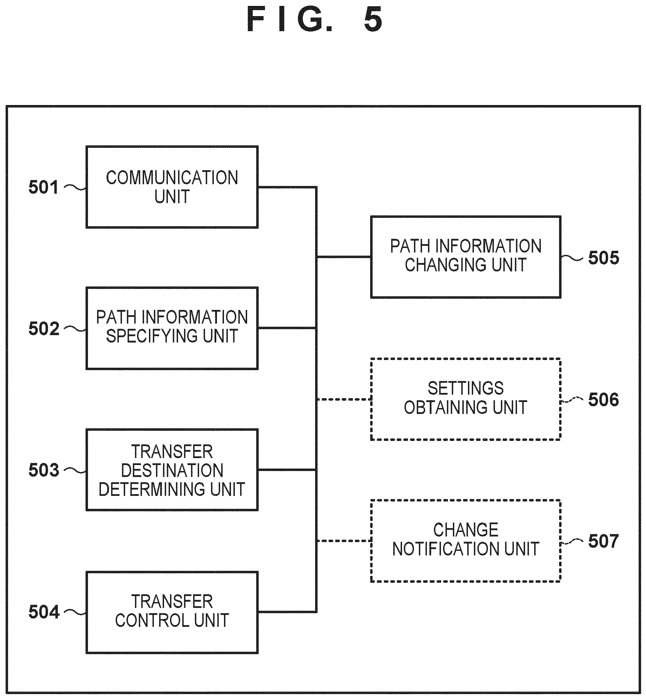

FIG. 5 shows an example of a functional configuration of a relay device according to the present embodiment. The relay device includes, for example, a communication unit 501, a path information specifying unit 502, a transfer destination determining unit 503, a transfer control unit 504, and a path information changing unit 505. Also, the relay device may also include a settings obtaining unit 506 and a change notification unit 507. These functional units may be implemented by, for example the processor 201 executing a program stored in the ROM 202.

The communication unit 501 is a functional unit for performing wireless communication with the base station device, the other relay devices, and the terminal device in accordance with the cellular communication standards. The path information specifying unit 502 specifies a path through which a signal received from the base station device or the other relay devices should be transferred based on the path identification information included in the signal. The transfer destination determining unit 503 determines the signal transfer destination device based on the path specified by the path information specifying unit 502. For example, the transfer destination determining unit 503 specifies a device to which the signal should be transferred next after the relay device in the specified path. In the case where, for example, communication cannot be performed using the wireless link between the relay device and the transfer destination device specified based on the specified path, or where a path with a low radio utilization rate is present in the wireless link to the address, the transfer destination determining unit 503 may determine to transfer the signal to a device that is different from the next transfer destination device specified based on the path identification information. The transfer control unit 504 controls the communication unit 501 to transfer the received signal to the transfer destination device determined by the transfer destination determining unit 503.

The path information changing unit 505 adds, to the received signal, second path identification information that is different from the first path identification information included in the received signal. The second path identification information is added such that data is transferred using another path in the case where, for example, communication cannot be performed using the wireless link between the relay device and the next transfer destination device specified based on the first path identification information, or where a path with a low radio utilization rate is present in the wireless link to the address. The path information changing unit 505 may optionally add path identification information that indicates an available path. Also, when the second path identification information is added to the received signal, the path information changing unit 505 deletes the first path identification information from the received signal. For example, if it is determined that the path specified by the first path identification information is not available, the first path identification information is deleted.

The settings obtaining unit 506 obtains settings information that indicates whether or not the addition or deletion of path identification information is permitted, settings information for determining whether or not to permit addition of path identification information, or settings information for determining whether or not to permit deletion of path identification information, from, for example, the base station device 101. The settings information may be obtained for each path or collectively for some or all of the paths. The settings information is notified before a signal including the data is transmitted through communication. The relay device determines whether or not to permit addition or deletion of path identification information based on the settings information obtained by the settings obtaining unit 506. Then, the path information changing unit 505 performs the addition or deletion of path identification information based on the result of determination. When the addition or deletion of path identification information has been performed, the change notification unit 507 transmits, to the base station device 101, a notification indicating that the addition or change of path identification information has been performed.

### Processing Flow

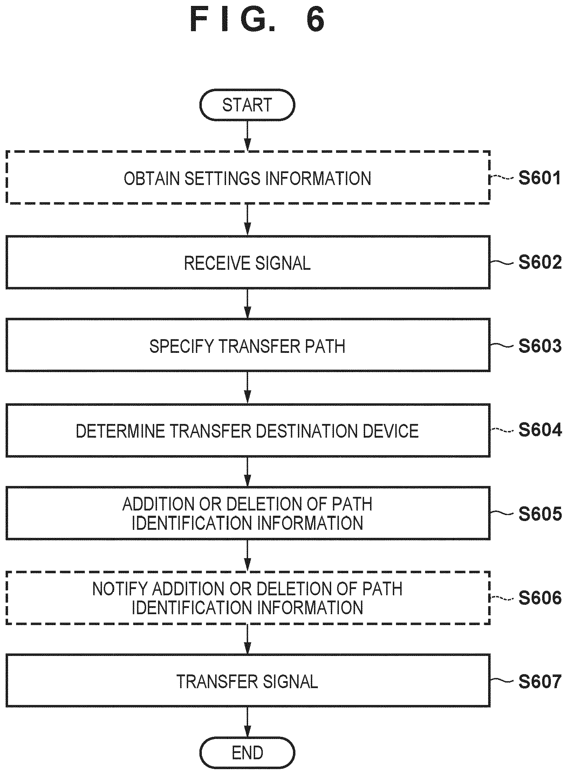

An overall flow of processing performed by a relay device will be described with reference to FIG. 6. The processing shown in FIG. 6 is performed by, for example, a relay device that is located midway in a path between the base station device and a relay device that is connected directly to the terminal device (or in other words, a relay device that is not located at the end of the path). In this processing, the relay device first obtains settings information from the base station device 101 (S601). The relay device determines, based on the obtained settings information, whether or not to permit addition or deletion of path identification information in the subsequent processing. This processing may be omitted in the case where, for example, the addition or deletion of path identification information is always permitted, or where the settings were already made when the relay device was installed.

The relay device receives a signal from another device (for example, the base station device or another relay device) (S602). The relay device analyzes the received signal, extracts address information indicating the device designated as the address and path identification information that are included in the signal, and specifies a path through which the signal should be transferred based on the path identification information (S603). Then, the relay device determines a transfer destination device based on the specified path (S604).

For example, the relay device determines a device to which the signal should be transferred next after the relay device in the path specified in S603 as the transfer destination device. At this time, if, for example, a failure occurs in the wireless link between the relay device and the next transfer destination device in the path, the relay device may determine that communication should not be performed with the transfer destination device. In this case, the relay device may determine another device that is not included in the path as the signal transfer destination. At this time, the relay device adds, for example, path identification information that indicates a path that includes the device determined as the signal transfer destination (S605). Also, if, for example, there is a path with a low radio utilization rate of the wireless link between the relay device and the device designated as the address, the relay device may add path identification information that indicates the path. Also, when the relay device adds the path identification information, the relay device may delete the path identification information included in the received signal. The addition or deletion of path identification information is performed in accordance with the settings information when the settings information was obtained in S601. The addition or deletion of path identification information may be omitted when there is no path that needs to be added. That is, the path identification information included in the received signal is maintained. When the addition or change of path identification information has been performed in S605, the relay device transmits a notification indicating the addition or change of path identification information has been performed to the base station device 101 (S606). This notification may be omitted.

After that, the relay device transmits, to the transfer destination device determined in S604, the data received in the signal received in S602, the address information included in the received signal, and a signal that includes the path identification information set in S605 (S607).

In this way, with the relay device described above, when a situation occurs in which it is difficult to transfer a signal along a path based on the path identification information included in the signal, the signal is continuously transferred using a path different from the path, and thus the signal can be transferred to the device designated as the address. Also, at this time, by adding path identification information that indicates a path in the manner described above, the transfer destination device can easily determine the signal transfer destination, and the degree of freedom for the device to select the transfer destination can be improved.

The invention is not limited to the foregoing embodiments, and various variations/changes are possible within the spirit of the invention.

This application claims priority from Japanese Patent Application Nos. 2019-147863 filed on August 9, 2019 and 2019-147867 filed on August 9, 2019, which are hereby incorporated by reference herein.

## Claims

1. A relay device that relays communication between a base station device and a terminal device, the relay device comprising:
receiving means for receiving a signal transmitted for the communication from another device;
determining means for determining a transfer destination device for data that is included in the received signal based on identification information that is included in the received signal and indicates a path through which the data is transferred between the base station device and the terminal device; and
transmitting means for transmitting the signal that includes the data to the determined transfer destination device,
wherein the determining means determines a specific device as the transfer destination device when the relay device is not included in the path indicated by the identification information.

2. The relay device according to claim 1, further comprising changing means for changing the identification information that is included in the received signal to obtain the signal that is transmitted by the transmitting means when the transfer destination device to which the signal that includes the data is transmitted by the transmitting means is not included in the path.

3. The relay device according to claim 2,
wherein the changing means changes the identification information by replacing the identification information with predetermined information.

4. The relay device according to claim 2,
wherein the changing means changes the identification information by deleting the identification information.

5. The relay device according to claim 2,
wherein the changing means changes the identification information by replacing the identification information with identification information that indicates a path that includes the transfer destination device to which the signal that includes the data is transmitted by the transmitting means.

6. The relay device according to claim 1, further comprising changing means for changing the identification information that is included in the signal when the relay device is not included in the path indicated by the identification information.

7. The relay device according to claim 6,
wherein the changing means changes the identification information by replacing the identification information that is included in the signal with identification information that indicates a path that includes the transfer destination device determined by the determining means.

8. The relay device according to any one of claims 1 to 7,
wherein when a device to which the signal can be transmitted by the relay device is included in the path indicated by the identification information, the determining means determines the device as the specific device.

9. The relay device according to any one of claims 1 to 8,
wherein the determining means determines the specific device when permission from the base station device is received, and discards the received signal when the permission is not received.

10. The relay device according to any one of claims 1 to 9,
wherein the determining means determines a transfer destination device that has been set in advance as the specific device.

11. The relay device according to claim 10,
wherein the determining means holds information that indicates a plurality of transfer destination devices that have been set in advance and to which an order of priority is assigned, and selects the specific device from among the plurality of transfer destination devices that have been set in advance based on the order of priority.

12. The relay device according to claim 10 or 11,
wherein the destination device has been set in advance when connections with a plurality of devices that have possibility to be selected as the transfer destination devices are established.

13. The relay device according to any one of claims 1 to 12,
wherein if a frequency of using a second path is lower than a frequency of using a first path that includes the relay device when a signal is transmitted from the terminal device to the base station device, the determining means determines a device that transmitted a signal to the relay device in the first path as the specific device.

14. The relay device according to any one of claims 1 to 13, further comprising notification means for, when the relay device is not included in the path indicated by the identification information, transmitting a notification indicating that the path is unavailable to the base station device.

15. The relay device according to any one of claims 1 to 13, further comprising notification means for, when the relay device is not included in the path indicated by the identification information, transmitting a notification indicating that the path is unavailable to the base station device,
wherein the determining means determines the specific device only for a predetermined period after transmitting the notification.

16. The relay device according to any one of claims 1 to 15,
wherein the determining means determines the specific device as the transfer destination device when the identification information is not included in the signal.

17. A control method that is executed by a relay device that relays communication between a base station device and a terminal device, the control method comprising:
receiving a signal transmitted for the communication from another device;
determining a transfer destination device for data that is included in the received signal based on identification information that is included in the received signal and indicates a path through which the data is transferred between the base station device and the terminal device; and
transmitting the signal that includes the data to the determined transfer destination device,
wherein a specific device is determined as the transfer destination device when the relay device is not included in the path indicated by the identification information.

18. A program that causes a computer that is included in a relay device that relays communication between a base station device and a terminal device to execute the following:
receiving a signal transmitted for the communication from another device;
determining a transfer destination device for data that is included in the received signal based on identification information that is included in the received signal and indicates a path through which the data is transferred between the base station device and the terminal device; and
transmitting the signal that includes the data to the determined transfer destination device,
wherein a specific device is determined as the transfer destination device when the relay device is not included in the path indicated by the identification information.

19. A relay device that relays communication between a base station device and a terminal device, the relay device comprising:
receiving means for receiving a signal transmitted for the communication from another device;
determining means for determining a transfer destination device for data that is included in the received signal based on first identification information that is included in the received signal and indicates a path through which the data is transferred between the base station device and the terminal device; and
transmitting means for transmitting, to the determined transfer destination device, the signal that includes the data and is obtained by adding, to the received signal, second identification information that indicates a path through which the data is transferred and that is different from the path indicated by the first identification information.

20. The relay device according to claim 19,
wherein when the path indicated by the first identification information is unavailable, the determining means determines a specific device as the transfer destination device; and
the transmitting means transmits a signal obtained by adding, to the received signal, the second identification information that indicates the path that includes the specific device.

21. The relay device according to claim 19 or 20,
wherein the second identification information indicates the path that passes through the relay device.

22. The relay device according to any one of claims 19 to 21, further comprising means for obtaining, from the base station device, information that indicates whether or not to permit addition of the second identification information,
wherein when the addition of the second identification information is permitted, the transmitting means adds the second identification information to the signal.

23. The relay device according to any one of claims 19 to 22, further comprising means for transmitting, to the base station device, a notification indicating that the second identification information has been added to the received signal.

24. The relay device according to any one of claims 19 to 23, further comprising means for obtaining, from the base station device, addition permission information based on which whether or not to permit adding one or more paths is determined,
wherein the transmitting means adds, to the received signal, the second identification information that corresponds to the path determined based on the addition permission information, and transmits the signal to the transfer destination device.

25. The relay device according to claim 24,
wherein the addition permission information is information that indicates radio utilization rate in each of the one or more paths.

26. The relay device according to any one of claims 19 to 25,
wherein, when the second identification information is added, the transmitting means transmits, to the transfer destination device, a signal obtained by deleting the first identification information from the received signal.

27. The relay device according to claim 26, further comprising means for obtaining, from the base station device, information that indicates whether or not to permit deleting the first identification information,
wherein, when the deletion of the first identification information is permitted, the transmitting means deletes the first identification information from the received signal.

28. The relay device according to claim 26 or 27, further comprising means for transmitting, to the base station device, a notification indicating that the first identification information has been deleted from the received signal.

29. The relay device according to any one of claims 26 to 28, further comprising means for obtaining, from the base station device, deletion permission information based on which whether or not to permit deleting one or more paths is determined,
wherein, when it is determined, based on the deletion permission information, that the first identification information should be deleted, the transmitting means deletes the first identification information from the received signal and transmits the signal to the transfer destination device.

30. The relay device according to any one of claims 19 to 29,
wherein the second identification information includes information that specifies a communication line that is used to transfer the data between devices that are included in the path specified by the second identification information.

31. A control method that is executed by a relay device that relays communication between a base station device and a terminal device, the control method comprising:
receiving a signal transmitted for the communication from another device;
determining a transfer destination device for data that is included in the received signal based on first identification information that is included in the received signal and indicates a path through which the data is transferred between the base station device and the terminal device; and
transmitting, to the determined transfer destination device, the signal that includes the data and is obtained by adding, to the received signal, second identification information that indicates a path through which the data is transferred and that is different from the path indicated by the first identification information.

32. A program that causes a computer that is included in a relay device that relays communication between a base station device and a terminal device to execute the following:
receiving a signal transmitted for the communication from another device;
determining a transfer destination device for data that is included in the received signal based on first identification information that is included in the received signal and indicates a path through which the data is transferred between the base station device and the terminal device; and
transmitting, to the determined transfer destination device, the signal that includes the data and is obtained by adding, to the received signal, second identification information that indicates a path through which the data is transferred and that is different from the path indicated by the first identification information.
